(19) Europäisches Patentamt

European Patent Office

Office européen des brevets

(11) EP 2 765 668 B1

(12) **EUROPEAN PATENT SPECIFICATION**

(45) Date of publication and mention
of the grant of the patent:
**13.05.2020 Bulletin 2020/20**

(51) Int Cl.:
***H02J 3/38*** (2006.01)

(21) Application number: **13154803.4**

(22) Date of filing: **11.02.2013**

(54) **Simulation of an electrical power distribution network in a wind farm**

Simulation eines Stromverteilernetzes in einem Windpark

Simulation d'un réseau de distribution d'énergie électrique dans un parc éolien

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.08.2014 Bulletin 2014/33**

(73) Proprietor: **Siemens Gamesa Renewable Energy
A/S
7330 Brande (DK)**

(72) Inventor: **Grastein, Jogvan Martin
7000 Fredericia (DK)**

(74) Representative: **Aspacher, Karl-Georg et al
Siemens Aktiengesellschaft
Postfach 22 16 34
80506 München (DE)**

(56) References cited:
**EP-A1- 2 397 689        EP-A1- 2 562 901
US-A1- 2009 218 817    US-A1- 2011 187 106**

• **DOWRUENG A ET AL: "Decentralised Energy
Management System with comprehension of
fluctuated renewable energy resources", CLEAN
ELECTRICAL POWER, 2009 INTERNATIONAL
CONFERENCE ON, IEEE, PISCATAWAY, NJ,
USA, 9 June 2009 (2009-06-09), pages 316-319,
XP031517632, ISBN: 978-1-4244-2543-3**

**Description**

<u>Field of Invention</u>

The present invention relates to the field of testing and designing control systems for wind farms, and in particular to simulation of electrical power distribution networks of wind farms.

<u>Art Background</u>

Modern wind turbines are large machines. Making a wind farm just for testing the SCADA (Supervisory Control and Data Acquisition) systems controlling the turbines is not feasible, because it is too expensive and takes up a lot of space. Furthermore, some of the tests may even destroy the turbines.

One approach to solving this problem is virtualization and simulation. One example is EP2397689. Since most of the components of the SCADA systems controlling the turbines run standard PC hardware with Windows operating systems, they may relatively easily be virtualized. Other components, like the turbine controller with all its sensors and control interfaces, are running on specialized hardware and therefore need to be simulated. Thus, the simulation model should emulate the turbine controller in the sense that the external interfaces of the turbine controller and the functions performed closely mimic the behavior of a real turbine controller. Ideally, it would be desirable to be able to replace the turbine controller with the simulation model without the other SCADA components noticing it.

However, in order to test power regulation, the electrical power distribution network also has to be considered. The electrical power distribution network, also referred to as the grid, is the network that interconnects the wind turbines in the wind farm and through which the power from the wind turbines is distributed towards a wind farm power output. It is highly undesirable to work with high voltage components in a testing environment, e.g. a laboratory.

Thus, what is needed is a way of testing a power regulation system for a wind farm in real time under realistic conditions in a safe and non-expensive environment.

<u>Summary of the Invention</u>

This need may be met by the subject matter according to the independent claims. Advantageous embodiments of the present invention are described by the dependent claims.

According to a first aspect of the invention there is provided a simulator for real time simulation of an electrical power distribution network of a wind farm, the wind farm comprising a plurality of interconnected wind turbines. The described simulator comprises (a) an input unit for receiving input data from a wind farm controller, (b) an output unit, and (c) a processing unit adapted to calculate output values based on the input data and a model of the electrical power distribution network, the output values representing calculated electrical parameters at a predetermined point within the electrical power distribution network, wherein (d) the output unit is adapted to transmit output data based on the calculated output values, preferably to the wind farm controller.

This aspect of the invention is based on the idea that by using a model of the electrical power distribution network, also referred to as the grid, to calculate electrical parameter values at a predetermined point in the grid based on input data received from a wind farm controller, output data representing the electrical behavior of the grid in response to the input data can be obtained and distributed to the wind farm controller in such a way that the wind farm controller may operate in substantially the same way as if it were in fact connected to a real wind farm.

In the present context, the term "real time simulation" may in particular denote a simulation that takes place under realistic conditions in the sense that the simulator reacts immediately on input data in substantially the same way as the object of the simulation would do.

In the present context, the term "wind farm" may in particular denote a plurality of wind turbines which, when operating, all generate and supply electrical power to a common output. The term "wind farm" may also be referred to as a "wind park".

In the present context, the term "wind turbine" may in particular denote a single wind-driven generator, such as a wind mill comprising a tower holding a nacelle and a rotor with rotor blades.

In the present context, the term "electrical power distribution network" may in particular denote an electrical network that interconnects the wind turbines of a wind farm in such a way that the electrical power generated by the wind turbines can be collected and output from a common output of the wind farm.

In the present context, the term "wind farm controller" may in particular denote a control system for controlling and monitoring the operation of each single wind turbine in a wind farm as well as of the wind farm as a whole.

In the present context, the term "model of the electrical power distribution network" may in particular denote a mathematical representation of the electrical power distribution network including the wind turbine generators and the connections between them. In other words, the model allows calculation of certain parameter values when other parameter values are given.

The input unit is preferably capable of communicating with a wind farm controller in the same way as a real wind farm would communicate with the wind farm controller. In particular, the input unit is capable of receiving input data, such as control parameters, from the wind farm controller. To achieve this, the input unit preferably comprises one or more interfaces suitable for communicating with the wind farm controller.

The output unit is preferably capable of communicating with a wind farm controller in such a way that the wind farm controller may receive output data relating to the calculated electrical parameter values at a predetermined point within the simulated power distribution network in the same way as when the corresponding electrical parameter values are obtained by measurement equipment in a real wind farm. To achieve this, the output unit preferably comprises one or more interfaces suitable for communicating with the wind farm controller.

The processing unit is capable of performing calculations based on the model of the electrical power distribution network and the received input data. The processing unit preferably comprises or has access to suitable memory resources for storing the input data, data representing the model and programs for performing the calculations.

The simulator according to this aspect allows real time testing of a power regulation system for a wind farm in a safe and non-expensive testing environment without the need for actual high voltage components. Specifically, the simulator is capable of interacting with the power regulation system and other control systems of a wind farm, i.e. by receiving and transmitting relevant data, in such a way that the power regulation and control systems may operate in exactly or at least substantially the same way as when they are connected with a real wind farm. Accordingly, the simulator makes it possible to conduct component testing, subsystem testing and system integration testing in real time under realistic conditions.

Furthermore, the simulator makes it possible to verify that power generation can be regulated as desired or specified and that conditions for grid compliance can be met in accordance with grid codes in the area where an actual wind farm is (to be) installed.

According to an embodiment of the invention, the model of the electrical power distribution network comprises an equivalent circuit diagram of the electrical power distribution network.

In the present context, the term "equivalent circuit diagram" may in particular denote a circuit diagram structure comprising a plurality of basic circuit elements, such as impedances, i.e. arbitrary combinations of resistors, capacitors and inductors, transformers, voltage generators, current generators, etc. The circuit elements are interconnected in a particular pattern that results in a circuit diagram structure with similar electrical properties and behavior as the electrical power distribution network.

By using an equivalent circuit diagram as a model, the processing unit may preferably calculate values of various electrical parameters in the diagram when other parameter values are given.

According to a further embodiment of the invention, each wind turbine is represented in the equivalent circuit diagram as a current generator, an internal impedance and a transformer connected in series, and wherein a first group of wind turbines is connected to a first feeder line and a second group of wind turbines is connected to a second feeder line.

In this model, the current generator and the internal impedance preferably present the equivalents of a wind turbine generator which is connected to a (first or second) feeder line via a transformer.

The feeder lines collect the current produced by each wind turbine and feed the resulting sum of currents to a common output terminal of the wind farm.

It is noted that more than two feeder lines may be used.

According to a further embodiment of the invention, the input data comprises specific operating parameter values for each of the plurality of interconnected wind turbines.

The specific operating parameter values preferably represent reference values, also referred to as set points, which indicate electrical parameter values relating to a specific operation of a given wind turbine.

According to a further embodiment of the invention, the specific operating parameter values for each of the plurality of wind turbines comprise a reference real power value, a reference reactive power value, a reference voltage value, and/or a reference frequency value.

The reference real power value for a given wind turbine specifies a certain value of real power which this wind turbine is supposed to generate.

The reference reactive power value for a given wind turbine specifies a certain value of reactive power which this wind turbine is supposed to generate.

The reference voltage value for a given wind turbine specifies a certain voltage which is supposed to be present at the wind turbine, i.e. at the wind turbine side of the transformer, at the generator of the wind turbine, or at some other predefined point within the wind turbine.

The reference frequency value for a given wind turbine specifies a certain frequency which the output current from the wind turbine is supposed to have.

According to a further embodiment of the invention, the output values comprise an output voltage value, an output current value, an output frequency value, and/or an output phase value at an output terminal of the wind farm.

In other words, the output values comprise one or more electrical parameter values at the output terminal of the wind farm, i.e. at a terminal of the electrical power distribution network of the wind farm that is intended to be connected to the public power grid. Thus, the output values represent the actual electrical output from the entire wind farm.

According to a further embodiment of the invention, the input unit and/or the output unit comprise a Modbus TCP interface, a Modbus RTU interface and/or a serial RS232 interface.

By using a Modbus TCP interface, a Modbus RTU interface and/or a serial RS232 interface, the input unit and the output unit of the simulator are capable of communicating directly with the wind farm controller.

Thereby, no modification of the wind farm controller will be necessary in order for it to interact and communicate with the simulator.

According to a second aspect of the invention there is provided a system for real time simulation of a wind farm, the wind farm comprising a plurality of interconnected wind turbines. The described system comprises (a) a simulator according to the first aspect or any of the above embodiments, and (b) a wind farm controller, wherein the wind farm controller is adapted to transmit input data to the simulator and to receive output data from the simulator.

This aspect of the invention is based on the idea that by using a model of the electrical power distribution network to calculate electrical parameter values at a predetermined point in the grid based on input data received from the wind farm controller, output data representing the electrical behavior of the grid in response to the input data can be obtained and distributed to the wind farm controller in such a way that the wind farm controller may operate in substantially the same way as if it were in fact connected to a real wind farm.

In the present context, the term "wind farm controller" may particularly denote parts of or an entire control system for a wind farm. Thus, the "wind farm controller" may e.g. consist of a wind farm power regulation unit, a wind farm management unit or both. Such units may be implemented as dedicated servers or in a single server.

The wind farm controller is capable of communicating with the simulator and other devices in a wind farm, preferably by means of an Ethernet connection.

According to a further embodiment of the invention, the system further comprises a turbine virtualization unit adapted to individually virtualize a respective wind turbine controller for each of the plurality of interconnected wind turbines of the wind farm.

In the present context, the term "virtualize a respective wind turbine controller" may in particular denote running the wind turbine controller software as a virtual machine instance on a computer or server in the system instead of running the control software on the computer of the real wind turbine in the wind farm.

By virtualizing the wind turbine controllers corresponding to each wind turbine in the wind farm that is simulated, the system interaction with the wind turbine controllers can be taken into account during simulation.

According to a further embodiment of the invention, the simulator is further adapted to (a1) calculate electrical parameter values for each wind turbine and to (a2) transmit the calculated electrical parameter values to the turbine virtualization unit, and the turbine virtualization unit is adapted to (b1) calculate turbine parameter values for each of the wind turbines based on the calculated electrical parameter values received from the simulator and to (b2) transmit the calculated turbine parameter values to the wind farm controller.

In this embodiment, the model of the electrical power distribution network is used by the simulator to further calculate electrical parameter values for each wind turbine of the wind farm, i.e. within the network. The calculated electrical parameter values are transmitted to the virtualization unit, e.g. via a Modbus TCP interface, such that each of the virtual turbine controllers receives the calculated electrical values for the corresponding wind turbine of the wind farm.

Based on the received electrical parameters, the virtualization unit is adapted to calculate individual turbine parameter values for each wind turbine and to transmit the calculated turbine parameter values to the wind farm controller.

Accordingly, the present embodiment makes it possible for the simulation to interact with the controller software (virtualized wind turbine controller) of each wind turbine in the simulated wind farm. Thereby, the simulation can deliver results that are even more realistic.

According to a further embodiment of the invention, the turbine parameter values comprise available power values, grid status values, active power values, reactive power values, and/or voltage values for each of the plurality of wind turbines.

In this embodiment, the available power value of a wind turbine denotes the amount of power that the wind turbine is capable of contributing with at a given time. The grid status value relates to whether the particular wind turbine is connected to the grid or not. The active power value and reactive power value respectively denote the amount of active and reactive power the wind turbine is producing. The voltage value denotes a voltage at a particular terminal of the wind turbine, such as at the generator output.

Thus, by calculating these turbine parameter values for each wind turbine, the turbine visualization unit can provide individual information on the operating conditions of each wind turbine in the simulated network.

Thereby, the impact of e.g. power regulation performed by the wind farm controller on the actual operating conditions of the individual wind turbines can be monitored and evaluated during the real time simulation.

According to a third aspect of the invention there is provided a method of real time simulation of an electrical power distribution network of a wind farm, the wind farm comprising a plurality of interconnected wind turbines. The described method comprises (a) receiving input data from a wind farm controller, (b) calculating output values based on the input data and a model of the electrical power distribution network, the output values representing calculated electrical parameter values at a predetermined point within the electrical power distribution network, and (c) transmitting output data based on the calculated output values to the wind farm controller.

This aspect of the invention is based on the same idea as the first and second aspects described above.

The method of real time simulation according to this aspect allows real time testing of a power regulation system for a wind farm in a safe and non-expensive testing environment without the need for high voltage components. The method allows interaction with the power regulation system and other control systems of a wind farm while the power regulation and control systems operate in exactly or at least substantially the same way as when they are connected with a wind farm. Thereby, it is made possible to conduct component testing, subsystem testing and system integration testing in real time under realistic conditions.

Furthermore, it becomes possible to verify that power generation can be regulated as desired or specified and that conditions for grid compliance can be met in accordance with grid codes in the area where an actual wind farm is (to be) installed.

According to a further embodiment of the invention, the method further comprises (a) calculating electrical parameter values for each wind turbine, (b) transmitting the calculated electrical parameter values to a turbine virtualization unit, (c) calculating turbine parameter values for each of the wind turbines based on the calculated electrical parameter values, and (d) transmitting the calculated turbine parameter values to the wind farm controller.

Accordingly, the present embodiment makes it possible for the simulation to interact with the controller software (virtualized wind turbine controller) of each wind turbine in the simulated wind farm. Thereby, the simulation can deliver results that are even more realistic.

According to a fourth aspect of the invention there is provided a computer program comprising executable instructions adapted to, when executed by a computer system, cause the computer system to perform the method according to the third aspect or any of the above embodiments thereof.

According to a fifth aspect of the invention there is provided a computer program product comprising a computer readable data carrier loaded with the computer program according to the preceding aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a schematic structure of a simulation system according to an embodiment of the present invention.

Figure 2 shows a model of an electrical power distribution network in accordance with an embodiment of the present invention.

Figure 3 shows a schematic process overview of a simulator in accordance with an embodiment of the present invention.

Detailed Description

The illustration in the drawing is schematic. It is noted that in different figures, similar or identical elements are provided with the same reference numerals or with reference numerals which differ only within the first digit.

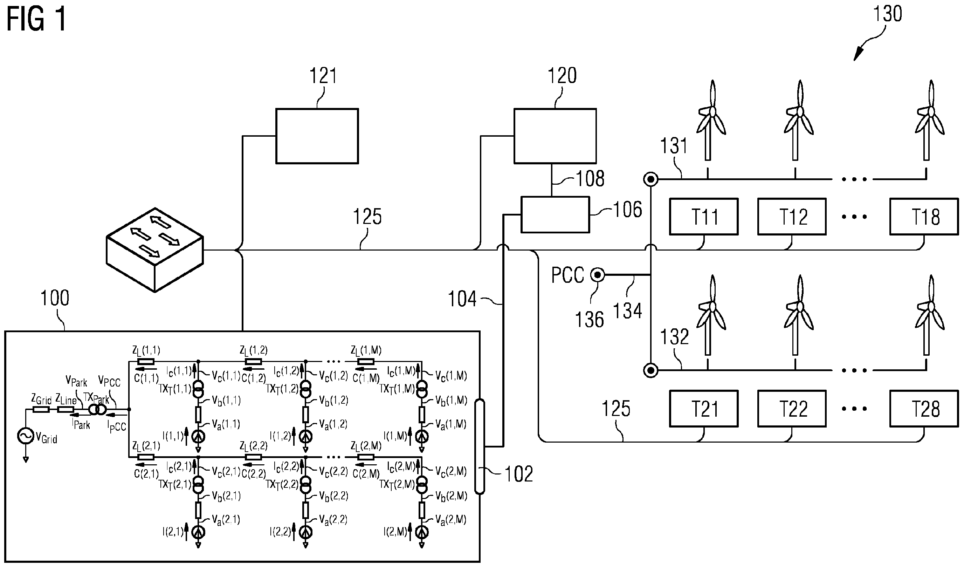

Figure 1 shows a schematic structure of a simulation system according to an embodiment of the present invention. The simulation system comprises a simulator 100, a wind farm controller 120 and a wind farm manager 121. The simulator 100 comprises an output interface 102 which is connected to a measurement unit 106 via signal cable 104. The measurement unit 106 is connected to the wind farm controller 120 via signal cable 108, which is preferably an RS232 serial cable. The subject of the simulation is shown as a wind farm 130 comprising a first row of wind turbines, which are connected to a first feeder line 131, and a second row of wind turbines, which are connected to a second feeder line 132. The first and second feeder lines 131 and 132 are connected to an output line 134 which leads to output terminal 136 (also denoted the point of common coupling, abbreviated PCC). Each wind turbine in the wind farm 130 has its own wind turbine controller. The respective controllers of the wind turbines in the first row are labeled T11, T12, ..., T18, and the respective controllers of the wind turbines in the second row are labeled T21, T22, ..., T28. The controllers T11, T12, ..., T18 and T21, T22, ..., T28 are in data communication with the simulator 100, the wind farm controller 120 and the wind farm manager 121 via data network cable 125, e.g. Ethernet. It is noted that the controllers are not the real wind turbine controllers in the wind park 130 which is to be simulated, but rather virtualized controllers running on a corresponding server or virtualization unit.

The simulator 100 is a suitable computer which is set up to receive input data from the wind farm controller 120 via the network connection 125 and to calculate (simulated) electrical parameter values at the output terminal 136 of the wind park 130 by means of a model of the electrical power distribution network of the wind farm, i.e. a model of the electrical behavior of the wind turbines and the connections 131, 132, 134 between them and the output terminal 136. The simulator may further be capable of using the model to calculate electrical parameter values at other positions within the wind farm distribution network, such as within one or more of the wind turbines.

Analog and/or digital signals representing the calculated parameter values are output from the simulator 100 via the interface 102 and transmitted to measurement unit 106 via signal cable 104. The measurement unit 106 derives corresponding sensor output signals based on the received signals and forwards these sensor signals to the wind farm controller 120 via the signal cable 108. Thereby, the sensor signals received by the wind farm controller 120 correspond to sensor signals which the farm controller 120 would receive if the measurement unit 106 were arranged at the output of the real wind farm 130. Accordingly, the farm controller 120 must not be modified in order to operate during the simulation.

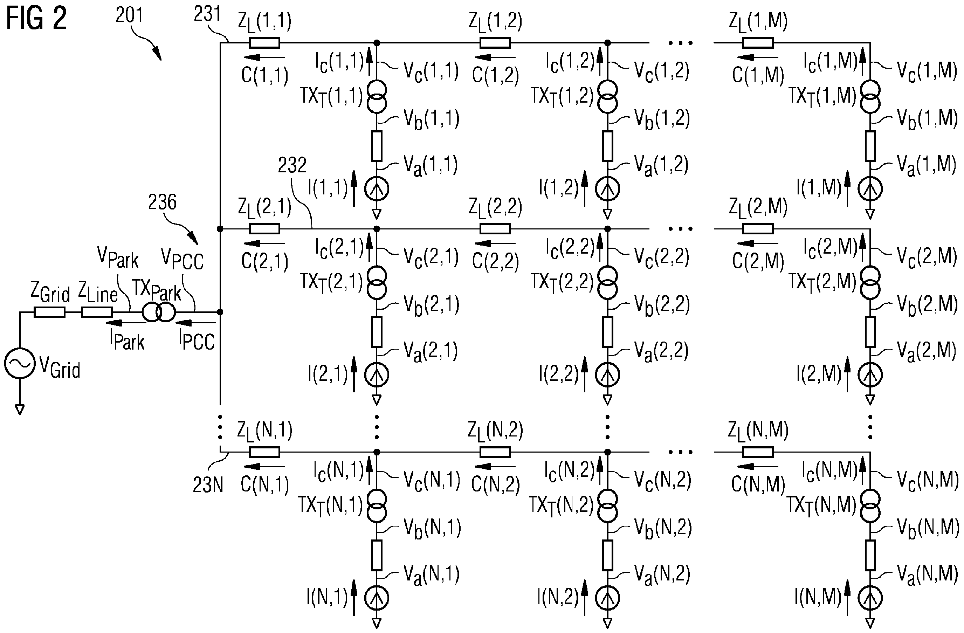

Figure 2 shows a model 201 of an electrical power distribution network in accordance with an embodiment of the present invention. More specifically, the model 201 is an equivalent circuit diagram of the electrical power distribution network of a wind farm, including the wind turbine generators.

In the model 201, the turbines in the wind farm are arranged in an N x M matrix. That is, each turbine T(i,j) can be identified by its row number i (from 1 to N) and its column number j (from 1 to M). Each row constitutes a feeder line 231, 232, ..., 23N where the turbines are serially interconnected. All feeder lines 231, 232, ..., 23N are connected to one Point of Common Coupling 236 (PCC).

Each turbine T(i,j) in the model 201 is represented as a transformer $TX_T(i,j)$, a turbine internal impedance $Z_T(i,j)$ and a current generator I(i,j) connected in series.

The impedance of the power line connecting turbine j with turbine j-1 in feeder i is named $Z_L(i, j)$. Using this convention $Z_L(i,1)$ represents the impedance of the power line connecting the first turbine on feeder i to the PCC. Furthermore, the model includes a park (or farm) transformer $TX_{park}$ located immediately after the PPC. The park transformer is connected to the electrical grid with high voltage power line. The line impedance of the high voltage power line is $Z_{Line}$. The electrical power grid is represented by voltage source $V_G$ and grid impedance $Z_G$ in series.

$V_a(i,j)$, $V_b(i,j)$ and $V_c(i,j)$ are the voltages at the turbine current generator and at primary coil and secondary coil of the turbine transformer, respectively. C(i,j) is the current on feeder i passing through the power line connecting turbine T(i,j) with turbine T(i,j-1). $V_{pcc}$ and $I_{pcc}$ are the voltage and current at the point of common coupling immediately before the park transformer. $V_{park}$ and $I_{park}$ is the voltage and current immediately after the park transformer - i.e. the voltage and current at the park terminal.

In the model 201, it is assumed that all turbines are identical, i.e.

$Z_T = Z_T(i,j)$ and $TX_T = TX_T(i,j)$ for all i and j.

It is further assumed that all transformers are ideal. Given this the voltage step up and current drop across the transformers can be described by the winding ratio n between the primary and secondary coil of the transformers. The phase shift across the transformers is 30 degrees ($\pi/6$). So let $n_T$ be the winding ratio of the turbine transformer and $n_P$ the same ratio for the park transformer.

With the nomenclature introduced above, the voltage and current calculations are as follows:

$$C(i,j) = \sum_{k=j}^{M} I_c(i,k) = \frac{e^{-j\frac{\pi}{6}}}{n_T} \sum_{k=j}^{M} I(i,k)$$

$$I_{PCC} = \sum_{i=1}^{N} C(i,1) = \frac{e^{-j\frac{\pi}{6}}}{n_T} \sum_{i=1}^{N} \sum_{j=1}^{M} I(i,j)$$

$$I_{Park} = \frac{e^{-j\frac{2\pi}{3}}}{n_P} \cdot I_{PCC} = \frac{e^{-j\frac{\pi}{3}}}{n_P \cdot n_T} \sum_{i=1}^{N} \sum_{j=1}^{M} I(i,j)$$

$$V_{Park} = V_{Grid} + (Z_{Grid} + Z_{Line}) \cdot I_{Park}$$

$$V_{PCC} = \frac{e^{j\frac{2\pi}{3}}}{n_P} \cdot V_{Park}$$

$$V_c(i,1) = V_{PCC} + Z_L(i,1) \cdot C(i,1)$$

$$V_c(i,j) = V_c(i,j-1) + Z_L(i,j) \cdot C(i,j) \ , \quad for \ 2 \le j \le M$$

$$V(i,j) = V_a(i,j) = \frac{e^{j\frac{\pi}{6}}}{n_T} \cdot V_c(i,j) + Z_T \cdot I(i,j)$$

```
Complex power (S) = real power (P) + j*reactive power (Q),
```

i.e.

$$S = P + j \cdot Q \quad \Rightarrow \quad M_S = \sqrt{P^2 + Q^2}$$

Now, introducing magnitude M and phase $\varphi$:
$V = M_V \cdot e^{j \cdot \phi_V}$ and $I = M_I \cdot e^{j \cdot \phi_I}$ and the conjugate $I^* = M_I \cdot e^{j \cdot \phi_I}$ and

$$S = \frac{V \cdot I^*}{2} = \frac{M_V \cdot M_I}{2} \cdot e^{j(\phi_V - \phi_I)} \quad \Rightarrow \quad M_S = \frac{M_V \cdot M_I}{2}$$

so

$$M_I = \frac{2 \cdot \sqrt{P^2 + Q^2}}{M_V}$$

Further, the phase angle is

$$\phi_V - \phi_I = \arctan\left(\frac{Q}{P}\right)$$

so

$$\phi_I = \phi_V - \arctan\left(\frac{Q}{P}\right)$$

Converter input P and Q are given with following restrictions

$$0 \le P \le P_{Avail} \quad and \quad 0 \le Q \le Q_{Max}$$

where $P_{Avail}$ is the available power and $Q_{Max}$ is the maximum reactive power the turbine can deliver.

Read the complex voltage at the current generator terminals

$$V = M_V \cdot e^{j \cdot \phi_V}$$

The current generator then has to deliver complex current equivalent to

$$I = M_I \cdot e^{j \cdot \phi_I}$$

where

$$M_I = \frac{2 \cdot \sqrt{P^2 + Q^2}}{M_V} \quad and \quad \phi_I = \phi_V - \arctan\left(\frac{Q}{P}\right)$$

The grid voltage $V_{Grid}$ the grid impedance $Z_{Grid}$ reference are complex functions of time. The grid impedance function reflects how the grid impedance varies with time and the grid voltage function is a sinusoidal function determined by the grid frequency, usually 50 or 60 Hz:

$$V_{Grid}(t) = M_{Grid} \cdot e^{j \cdot \omega_{Grid} \cdot t} \quad where \quad \omega_{Grid} = 2 \cdot \pi \cdot f_{Grid}$$

In practice these functions are defined for each simulation - i.e. this is an input that has to be supplied to the grid simulator - either at start up or when it is running.

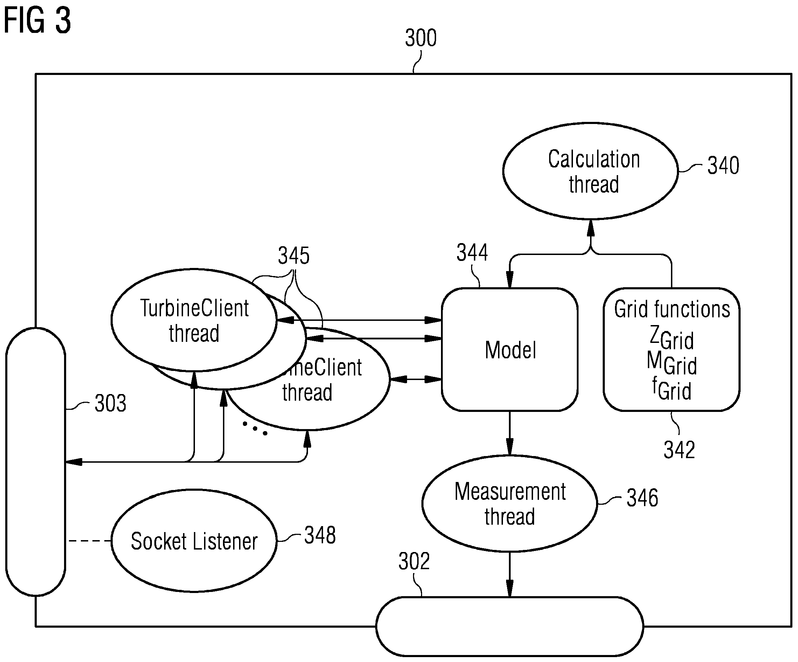

Figure 3 shows a schematic process overview of a simulator 300 in accordance with an embodiment of the present invention. The simulator 300 comprises an analog I/O interface 302 and a turbine interface 303 (Modbus TCP). The simulator 300 is capable of performing several threads, i.e. a calculation thread 340, a number of turbine client threads 345, a measurement thread 346 and a socket listening thread 348. Based on the model 344 and the grid functions 342 together with the current at each turbine terminal as well as the grid voltage and frequency, the calculation thread 340 computes the voltage at each turbines terminal according to the formulae described above. The turbine client threads 345 handle client (Modbus) communication. The client threads 345 can set and read registers (variables) on behalf of the client. This thread uses the measure function to get the turbines voltage, current, frequency and phase. The socket listener thread 348 listens for new modbus/tcp connections from the network. Once a connection is established, a turbine client thread 345 is spawned which handles the rest of the client/server communication. The measurement thread 346 reads PCC voltage and current and writes these values to the registers of the 10 board 302.

Referring also to Figure 2 and the formulas discussed in connection therewith, the calculation thread 344 may be implemented in standard C as follows:

```
void * grid_calculation () {

  int r, c;
  double t, s;
  double mS, mV, mI;
  double phiS, phiV, phiI;
  while (1) {
    t = time now - t_start;
```

```
s = 2.0 * Pi * f_grid(t) * t;
mV = m _grid(t);
Zgrid = z_grid(t);

Vgrid.Re = mV * cos(s);
Vgrid.Im = mV * sin(s);

Ipcc.Re = 0.0;
Ipcc.Im = 0.0;

// Compute accumulated current
for (r = 0; r < nrows; r++) {

  // Compute the magnitude of S, V and I for last turbine
     on feeder r
  mS = sqrt(S[r][ncols-1].Re * S[r][ncols-1].Re +
       S[r][ncols-1].Im * S[r][ncols-1].Im);
  mV = sqrt(V[r][ncols-1].Re * V[r][ncols-1].Re +
       V[r][ncols-1].Im * V[r][ncols-1].Im);
  mI = (mV > 0) ? 2.0 * mS / mV : 0.0;

  // Compute the phase of S, V and I for the last turbine
     on feeder r
  phiS = (S[r][ncols-1].Re != 0) ? atan(S[r][ncols-1].Im
       / S[r][ncols-1].Re) : PiHalf;
  phiV = (V[r][ncols-1].Re != 0) ? atan(V[r][ncols-1].Im
       / V[r][ncols-1].Re) : PiHalf;
  phiI = phiV - phiS;

  // Compute the Current generated by the last turbine on
     feeder r
  I[r][ncols-1].Re = mI * cos(phiI);
  I[r][ncols-1].Im = mI * sin(phiI);

  // Compute the Accumulated current from the last
     turbine on feeder r
  C[r] [ncols-1].Re =
        (I[r] [ncols-1].Re * eJMinuxPiSixth.Re -
         I[r] [ncols-1].Im * eJMinuxPiSixth.Im) / nT;
  C[r] [ncols-1].Im =
        (I[r] [ncols-1].Re * eJMinuxPiSixth.Im +
         I[r] [ncols-1].Im * eJMinuxPiSixth.Re) / nT;

  // C(r, c) = C(r, c+1) + I(r, c) * eJMinuxPiSixth / nT,
     c = M-2..0
  for (c = ncols - 2; c >= 0; c--) {

    // Compute the magnitude of S, V and I for turbine c
       on feeder r
    mV = sqrt(V[r] [c].Re * V[r] [c].Re +
          V[r] [c] . Im * V[r] [c] . Im) ;
    mS = sqrt (S[r] [c] .Re * S[r] [c].Re +
          S[r] [c] . Im * S[r] [c] · Im) ;
    mI = (mV > 0) ? 2.0 * mS / mV : 0.0;
    // Compute the phase of S, V and I for turbine c on
       feeder r
    phiV = (V[r] [c].Re != 0) ? atan(V[r][c].Im /
          V[r] [c].Re) : PiHalf;
    phiS = (S[r] [c].Re != 0) ? atan(S [r] [c].Im /
          S[r] [c].Re) : PiHalf;
    phiI = phiV - phiS;

      // Compute the Current generated by turbine c on
```

```
     feeder r
  I[r] [c].Re = mI * cos(phiI);
  I[r] [c].Im = mI * sin(phiI) ;

  // Compute the Accumulated current from turbine c on
     feeder r
  C[r] [c].Re = C [r] [c+1].Re + (I [r] [c].Re *
  eJMinuxPiSixth.Re - I[r] [c].Im * eJMinuxPiSixth.Im) / nT;
  C[r] [c] .Im = C[r] [c+1] .Im + (I [r] [c] .Re *
  eJMinuxPiSixth.Im + I[r][c].Im * eJMinuxPiSixth.Re) / nT;

}; // for c

// Ipcc = SUM {r = 0..N-1} C(r, 0)
Ipcc.Re += C[r] [0].Re;
Ipcc.Im += C[r] [0].Im;

}; // for r

// Ipark = Ippc * eJMinuxPiSixth / nP;
Ipark.Re = (Ipcc.Re * eJMinuxPiSixth.Re -
            Ipark.Im * eJMinuxPiSixth.Im) / nP;
IPark.Im = (Ipcc.Re * eJMinuxPiSixth.Im +
            Ipark.Im * eJMinuxPiSixth.Re) / nP;

// Vpark = Vgrid + (Zgrid + Zline) * Ipark;
Vpark.Re = Vgrid.Re + (Zgrid.Re + Zline.Re) * Ipark.Re -
            (Zgrid.Im + Zline.Im) * Ipark.Im;
Vpark.IM = Vgrid.Im + (Zgrid.Re + Zline.Re) * Ipark.Im -
            (Zgrid.Im + Zline.Im) * Ipark.Re;

// Vpcc = Vpark * eJPlusPiSixth / nP
Vpcc.Re = (Vpark.Re * eJPlusPiSixth.Re -
            Vpark.Im * eJPlusPiSixth.Im) / nP;
Vpcc.Im = (Vpark.Re * eJPlusPiSixth.Im -
            Vpark.Im * eJPlusPiSixth.Re) / nP;

// Compute the voltages
for (r = 0; r < nrows; r++) {

  // Vc(r, 0) = Vpcc + Zl(r, 0) * C(r, 0)
  // Compute the voltage at the terminals of the first
     turbine on feeder r
  Vc[r][0].Re = Vpcc.Re + Zl[r] [0].Re * C[r][0].Re -
                Zl[r] [0] .Im * C[r] [0] .Im;
  Vc[r] [0].Im = Vpcc.Im + Zl[r] [0].Im * C[r][0].Re +
                Zl[r] [0] .Re * C[r] [0] .Im;

  // Compute the voltage at current generator of the
     first turbine on feeder r
  V[r] [0].Re = (Vc[r] [0].Re * eJPlusPiSixth.Re -
                Vc [r] [0].Im * eJPlusPiSixth.Im) / nT +
                Zt.Re * I[r] [0].Re - Zt.Im * I[r][0].Im;
  V[r] [0].Im = (Vc[r] [0].Re * eJPlusPiSixth.Im +
                Vc[r] [0].Im * eJPlusPiSixth.Re) / nT +
                Zt.Re * I[r] [0].Im - Zt.Im * I[r][0].Re;

  // Vc(r, c) = Vc(r, c-1) + Zl(r, c) * C(r, c) ,
     c = 1..M-1
  for (c = 1; c < ncols; c++) {

    // Compute the voltage at the terminals of turbine c
       on feeder r
```

```
    Vc[r][c].Re = Vc[r][c-1].Re +
                  Zl[r] [c].Re * C[r] [c].Re -
                  Zl[r] [c].Im * C[r] [c].Im;
    Vc[r] [0] .Im = Vc[r] [c-1] .Re +
                  Zl[r] [c].Im * C[r] [c].Re +
                  Zl[r] [c].Re * C[r] [c].Im;

     // Compute the voltage at current generator of
        turbine c on feeder r
    V[r][c].Re = (Vc[r] [c].Re * eJPlusPiSixth.Re -
                  Vc[r] [c].Im * eJPlusPiSixth.Im) / nT +
                  Zt.Re * I[r] [c].Re - Zt.Im * I[r][c].Im;
    V[r] [c].Im = (Vc[r] [c].Re * eJPlusPiSixth.Im +
                  Vc[r] [c].Im * eJPlusPiSixth.Re) / nT +
                  Zt.Re * I[r] [c].Im - Zt.Im * I[r] [c].Re;


    }; // for c

  }; // for r
  usleep(5); // This is a high priority thread, so we sleep
             here for 5 microseconds to give other
             threads some priority.


  }; // while

  };
```

It is noted that the model described above is a single phase model. In order to perform realistic simulations, three phase signals should be supplied to the grid measurement equipment 106. This can be achieved by generating three down scaled copies of the original signal and phase shifting two of them respectively 120 and 240 degrees. Alternatively, three single-phase models can be added in parallel.

By simulating the grid or electrical power distribution network of a wind farm by means of the above described embodiments of the simulator 100, 300, the following is achieved:
Closed loop power regulation mechanisms can be tested in a simulated and virtualized environment without connecting to a real wind farm. The described embodiments are in particular suitable for medium-sized wind farms which have one connection to the electrical power grid, which comprise a plurality of wind turbines arranged in a number of feeder lines, and in which all feeder lines are connected to one common point of coupling.

The grid simulator comprises a modbus interface which allows the grid simulator to cooperate with real wind farm servers and virtualized turbines. The grid simulator further comprises a low voltage 10 interface card by means of which it can cooperate with real grid measurement equipment. In sum, these features make it possible to test closed loop power regulation on a virtualized wind farm in real time in a safe and cost-efficient manner.

It is noted that the term "comprising" does not exclude other elements or steps and that the use of the articles "a" or "an" does not exclude a plurality. Also elements described in association with different embodiments may be combined. It is further noted that reference numerals in the claims are not to be construed as limiting the scope of the claims.

**Claims**

1. A simulator for real time simulation of an electrical power distribution network of a wind farm, the wind farm comprising a plurality of interconnected wind turbines, the simulator being adapted for testing the operation of a wind farm controller without connection to a real wind farm, the simulator comprising
   an input unit for receiving input data from a wind farm controller,
   an output unit (102, 302), and
   a processing unit adapted to calculate output values based on the input data and a model of the electrical power distribution network, the output values representing calculated electrical parameter values at a predetermined point (136, 236) within the electrical power distribution network, **characterised in that** the output unit (102, 302) is adapted to transmit output data based on the calculated output values to the wind farm controller, so that the wind farm controller operates in the same way as when it is connected to a real wind farm.

**2.** The simulator according to the preceding claim, wherein the model of the electrical power distribution network comprises an equivalent circuit diagram (201) of the electrical power distribution network.

**3.** The simulator according to the preceding claim, wherein each wind turbine is represented in the equivalent circuit diagram as a current generator ($I(1,1), I(1,2),..., I(1,M),..., I(N,M-1), I(N,M)$), an internal impedance ($Z_T(1,1), Z_T(1,2),..., Z_T(1,M),..., Z_T(N,M-1), Z_T(N,M)$) and a transformer ($TX_T(1,1), TX_T(1,2),..., TX_T(1,M),..., TX_T(N,M-1), TX_T(N,M)$) connected in series, and wherein a first group of wind turbines is connected to a first feeder line (131, 231) and a second group of wind turbines (132, 232) is connected to a second feeder line.

**4.** The simulator according to any of the preceding claims, wherein the input data comprises specific operating parameter values for each of the plurality of interconnected wind turbines.

**5.** The simulator according to the preceding claim, wherein the specific operating parameter values for each of the plurality of wind turbines comprise a reference real power value, a reference reactive power value, a reference voltage value, and/or a reference frequency value.

**6.** The simulator according to any of the preceding claims, wherein the output values comprise an output voltage value, an output current value, an output frequency value, and/or an output phase value at an output terminal of the wind farm.

**7.** The simulator according to any of the preceding claims, wherein the input unit and/or the output unit (102, 302) comprise a Modbus TCP interface, a Modbus RTU interface and/or a serial RS232 interface.

**8.** A system for real time simulation of a wind farm, the wind farm comprising a plurality of interconnected wind turbines, the system comprising
a simulator (100, 300) according to any of the preceding claims, and
a wind farm controller (120, 121), **characterised in that** the wind farm controller (120, 121) is adapted to transmit input data to the simulator (100, 300) and to receive output data from the simulator (100, 300), so that the wind farm controller operates in the same way as when it is connected to a real wind farm.

**9.** The system according to the preceding claim, further comprising a turbine virtualization unit (T11, T12, T18, T21, T22, T28; 345) adapted to individually virtualize a respective wind turbine controller for each of the plurality of interconnected wind turbines of the wind farm.

**10.** The system according to the preceding claim, wherein
the simulator (100, 300) is further adapted to calculate electrical parameter values for each wind turbine and to transmit the calculated electrical parameter values to the turbine virtualization unit, and
the turbine virtualization unit is adapted to calculate turbine parameter values for each of the wind turbines based on the calculated electrical parameter values received from the simulator (100, 300) and to transmit the calculated turbine parameter values to the wind farm controller (120, 121) .

**11.** The system according to the preceding claim, wherein the turbine parameter values comprise available power values, grid status values, active power values, reactive power values, and/or voltage values for each of the plurality of wind turbines.

**12.** A method of real time simulation of an electrical power distribution network of a wind farm, the wind farm comprising a plurality of interconnected wind turbines, the method being adapted for testing the operation of a wind farm controller without connection to a real wind farm, the method comprising
receiving input data from a wind farm controller,
calculating output values based on the input data and a model of the electrical power distribution network, the output values representing calculated electrical parameter values at a predetermined point within the electrical power distribution network, and **characterised in** transmitting output data based on the calculated output values to the wind farm controller, so that the wind farm controller operates in the same way as when it is connected to a real wind farm.

**13.** The method according to the preceding claim, further comprising
calculating electrical parameter values for each wind turbine,
transmitting the calculated electrical parameter values to a turbine virtualization unit,
calculating turbine parameter values for each of the wind turbines based on the calculated electrical parameter values, and

transmitting the calculated turbine parameter values to the wind farm controller.

14. A computer program comprising executable instructions adapted to, when executed by a computer system, cause the computer system to perform the method according to any of claims 12 and 13.

15. A computer program product comprising a computer readable data carrier loaded with the computer program according to the preceding claim.

**Patentansprüche**

1. Simulator für die Echtzeitsimulation eines Stromverteilungsnetzes eines Windparks, wobei der Windpark mehrere miteinander verbundene Windenergieanlagen umfasst, wobei der Simulator zum Prüfen des Betriebs einer Windparksteuerung ohne Verbindung zu einem echten Windpark ausgelegt ist und Folgendes umfasst:

eine Eingabeeinheit zum Empfangen von Eingabedaten aus einer Windparksteuerung,
eine Ausgabeeinheit (102, 302) und
eine Verarbeitungseinheit, die so ausgelegt ist, dass sie auf der Grundlage der Eingabedaten und eines Modells des Stromverteilungsnetzes Ausgabewerte berechnet, die berechnete elektrische Parameterwerte an einem vorgegebenen Punkt (136, 236) in dem Stromverteilungsnetz repräsentieren,
**dadurch gekennzeichnet, dass**
die Ausgabeeinheit (102, 302) so ausgelegt ist, dass sie auf der Grundlage der berechneten Ausgabewerte Ausgabedaten an die Windparksteuerung übermittelt, so dass die Windparksteuerung genauso arbeitet, wie wenn sie mit einem echten Windpark verbunden ist.

2. Simulator nach dem vorhergehenden Anspruch, wobei das Modell des Stromverteilungsnetzes ein Ersatzschaltbild (201) des Stromverteilungsnetzes umfasst.

3. Simulator nach dem vorhergehenden Anspruch, wobei jede Windenergieanlage in dem Ersatzschaltbild als in Reihe geschalteter Stromerzeuger $(I(1,1), I(1,2),..., I(1,M),..., I(N,M-1), I(N,M))$, Innenwiderstand $(Z_T(1,1), Z_T(1,2),..., Z_T(1,M),..., Z_T(N,M-1), Z_T(N,M))$ und Transformator $(TX_T(1,1), TX_T(1,2),..., TX_T(1,M),..., TX_T(N,M-1), TX_T(N,M))$ dargestellt ist und eine erste Gruppe Windenergieanlagen mit einer ersten Speiseleitung (131, 231) und eine zweite Gruppe Windenergieanlagen (132, 232) mit einer zweiten Speiseleitung verbunden ist.

4. Simulator nach einem der vorhergehenden Ansprüche, wobei die Eingabedaten bestimmte Betriebsparameterwerte für jede der mehreren miteinander verbundenen Windenergieanlagen umfassen.

5. Simulator nach dem vorhergehenden Anspruch, wobei die bestimmten Betriebsparameterwerte für jede der mehreren Windenergieanlagen je einen Referenzwert für die Wirkleistung, die Blindleistung, die Spannung und/oder die Frequenz umfassen.

6. Simulator nach einem der vorhergehenden Ansprüche, wobei die Ausgabewerte einen Ausgangsspannungswert, einen Ausgangsstromwert, einen Ausgangsfrequenzwert und/oder einen Ausgangsphasenwert an einem Ausgangsanschluss des Windparks umfassen.

7. Simulator nach einem der vorhergehenden Ansprüche, wobei die Eingabeeinheit und/oder die Ausgabeeinheit (102, 302) eine Modbus-TCP-Schnittstelle, eine Modbus-RTU-Schnittstelle und/oder eine serielle RS232-Schnittstelle umfasst.

8. System für die Echtzeitsimulation eines Windparks, der mehrere miteinander verbundene Windenergieanlagen umfasst, wobei das System Folgendes umfasst:

einen Simulator (100, 300) nach einem der vorhergehenden Ansprüche und
eine Windparksteuerung (120, 121),
**dadurch gekennzeichnet, dass**
die Windparksteuerung (120, 121) so ausgelegt ist, dass sie Eingabedaten an den Simulator (100, 300) übermittelt und Ausgabedaten vom Simulator (100, 300) empfängt, so dass die Windparksteuerung genauso arbeitet, wie wenn sie mit einem echten Windpark verbunden ist.

9. System nach dem vorhergehenden Anspruch, das ferner eine Turbinenvirtualisierungseinheit (T11, T12, T18, T21, T22, T28; 345) umfasst, die so ausgelegt ist, dass sie eine jeweilige Windenergieanlagensteuerung für jede der mehreren miteinander verbundenen Windenergieanlagen des Windparks einzeln virtualisiert.

10. System nach dem vorhergehenden Anspruch, wobei
der Simulator (100, 300) ferner so ausgelegt ist, dass er elektrische Parameterwerte für jede Windenergieanlage berechnet und die berechneten elektrischen Parameterwerte an die Turbinenvirtualisierungseinheit übermittelt, und die Turbinenvirtualisierungseinheit so ausgelegt ist, dass sie für jede der Windenergieanlagen auf der Grundlage der aus dem Simulator (100, 300) empfangenen berechneten elektrischen Parameterwerte Turbinenparameterwerte berechnet und die berechneten Turbinenparameterwerte an die Windparksteuerung (120, 121) übermittelt.

11. System nach dem vorhergehenden Anspruch, wobei die Turbinenparameterwerte Werte zur verfügbaren Leistung, zum Stromnetzzustand, zur Wirkleistung, zur Blindleistung und/oder Spannungswerte für jede der mehreren Windenergieanlagen umfassen.

12. Verfahren für die Echtzeitsimulation eines Stromverteilungsnetzes eines Windparks, wobei der Windpark mehrere miteinander verbundene Windenergieanlagen umfasst, wobei das Verfahren zum Prüfen des Betriebs einer Windparksteuerung ohne Verbindung zu einem echten Windpark ausgelegt ist und Folgendes umfasst:

Empfangen von Eingabedaten aus einer Windparksteuerung,
Berechnen von Ausgabewerten, die berechnete elektrische Parameterwerte an einem vorgegebenen Punkt in dem Stromverteilungsnetz repräsentieren, auf der Grundlage der Eingabedaten und eines Modells des Stromverteilungsnetzes, und **gekennzeichnet durch**
das Übermitteln von Ausgabedaten auf der Grundlage der berechneten Ausgabewerte an die Windparksteuerung, so dass die Windparksteuerung genauso arbeitet, wie wenn sie mit einem echten Windpark verbunden ist.

13. Verfahren nach dem vorhergehenden Anspruch, das ferner Folgendes umfasst:

Berechnen elektrischer Parameterwerte für jede Windenergieanlage,
Übermitteln der berechneten elektrischen Parameterwerte an eine Turbinenvirtualisierungseinheit,
Berechnen von Turbinenparameterwerten für jede der Windenergieanlagen auf der Grundlage der berechneten elektrischen Parameterwerte und
Übermitteln der berechneten Turbinenparameterwerte an die Windparksteuerung.

14. Computerprogramm mit ausführbaren Anweisungen, das so ausgelegt ist, dass es beim Ausführen durch ein Computersystem das Computersystem dazu veranlasst, das Verfahren nach einem der Ansprüche 12 und 13 durchzuführen.

15. Computerprogrammprodukt mit einem computerlesbaren Datenträger, auf den das Computerprogramm nach dem vorhergehenden Anspruch geladen ist.

**Revendications**

1. Simulateur pour la simulation en temps réel d'un réseau de distribution d'énergie électrique d'un parc éolien, le parc éolien comprenant une pluralité d'éoliennes interconnectées, le simulateur étant conçu pour tester le fonctionnement d'un contrôleur de parc éolien sans connexion à un parc éolien réel, le simulateur comprenant
une unité d'entrée pour recevoir des données d'entrée à partir d'un contrôleur de parc éolien,
une unité de sortie (102, 302), et
une unité de traitement conçue pour calculer des valeurs de sortie sur la base des données d'entrée et d'un modèle du réseau de distribution d'énergie électrique, les valeurs de sortie représentant des valeurs calculées de paramètre électrique à un point prédéterminé (136, 236) à l'intérieur du réseau de distribution d'énergie électrique,
**caractérisé en ce que**
l'unité de sortie (102, 302) est conçue pour transmettre des données de sortie sur la base des valeurs de sortie calculées au contrôleur de parc éolien, de sorte que le contrôleur de parc éolien fonctionne de la même manière que lorsqu'il est connecté à un parc éolien réel.

2. Simulateur selon la revendication précédente, dans lequel le modèle du réseau de distribution d'énergie électrique comprend un schéma de circuit équivalent (201) du réseau de distribution d'énergie électrique.

3. Simulateur selon la revendication précédente, dans lequel chaque éolienne est représentée dans le schéma de circuit équivalent sous la forme d'un générateur de courant ($I(1,1)$, $I(1,2)$, ..., $I(1,M)$, ..., $I(N,M-1)$, $I(N,M)$), d'une impédance interne ($Z_T(1,1)$, $Z_T(1,2)$, ..., $Z_T(1,M)$, ..., $Z_T(N,M-1)$, $Z_T(N,M)$) et d'un transformateur ($TX_T(1,1)$, $TX_T(1,2)$, ..., $TX_T(1,M)$, ..., $TX_T(N,M-1)$, $TX_T(N,M)$) connectés en série, et dans lequel un premier groupe d'éoliennes est connecté à une première ligne d'alimentation (131, 231) et un second groupe d'éoliennes (132, 232) est connecté à une seconde ligne d'alimentation.

4. Simulateur selon l'une quelconque des revendications précédentes, dans lequel les données d'entrée comprennent des valeurs spécifiques de paramètre de fonctionnement pour chacune de la pluralité d'éoliennes interconnectées.

5. Simulateur selon la revendication précédente, dans lequel les valeurs spécifiques de paramètre de fonctionnement pour chacune de la pluralité d'éoliennes comprennent une valeur de puissance réelle de référence, une valeur de puissance réactive de référence, une valeur de tension de référence et/ou une valeur de fréquence de référence.

6. Simulateur selon l'une quelconque des revendications précédentes, dans lequel les valeurs de sortie comprennent une valeur de tension de sortie, une valeur de courant de sortie, une valeur de fréquence de sortie et/ou une valeur de phase de sortie au niveau d'une borne de sortie du parc éolien.

7. Simulateur selon l'une quelconque des revendications précédentes, dans lequel l'unité d'entrée et/ou l'unité de sortie (102, 302) comprennent une interface Modbus TCP, une interface Modbus RTU et/ou une interface série RS232.

8. Système de simulation en temps réel d'un parc éolien, le parc éolien comprenant une pluralité d'éoliennes interconnectées, le système comprenant
   un simulateur (100, 300) selon l'une quelconque des revendications précédentes, et
   un contrôleur de parc éolien (120, 121),
   **caractérisé en ce que**
   le contrôleur de parc éolien (120, 121) est conçu pour transmettre des données d'entrée au simulateur (100, 300) et pour recevoir des données de sortie à partir du simulateur (100, 300), de sorte que le contrôleur de parc éolien fonctionne de la même manière que lorsqu'il est connecté à un parc éolien réel.

9. Système selon la revendication précédente, comprenant en outre une unité de virtualisation d'éolienne (T11, T12, T18, T21, T22, T28 ; 345) conçue pour virtualiser individuellement un contrôleur d'éolienne respectif pour chacune de la pluralité d'éoliennes interconnectées du parc éolien.

10. Système selon la revendication précédente, dans lequel
    le simulateur (100, 300) est en outre conçu pour calculer des valeurs de paramètre électrique pour chaque éolienne et pour transmettre les valeurs calculées de paramètre électrique à l'unité de virtualisation d'éolienne, et
    l'unité de virtualisation d'éolienne est conçue pour calculer des valeurs de paramètre d'éolienne pour chacune des éoliennes sur la base des valeurs calculées de paramètre électrique reçues à partir du simulateur (100, 300) et pour transmettre les valeurs calculées de paramètre d'éolienne au contrôleur de parc éolien (120, 121).

11. Système selon la revendication précédente, dans lequel les valeurs de paramètre d'éolienne comprennent des valeurs de puissance disponible, des valeurs d'état du réseau, des valeurs de puissance active, des valeurs de puissance réactive et/ou des valeurs de tension pour chacune de la pluralité d'éoliennes.

12. Procédé de simulation en temps réel d'un réseau de distribution d'énergie électrique d'un parc éolien, le parc éolien comprenant une pluralité d'éoliennes interconnectées, le procédé étant conçu pour tester le fonctionnement d'un contrôleur de parc éolien sans connexion à un parc éolien réel, le procédé comprenant
    la réception de données d'entrée à partir d'un contrôleur de parc éolien,
    le calcul de valeurs de sortie sur la base des données d'entrée et d'un modèle du réseau de distribution d'énergie électrique, les valeurs de sortie représentant des valeurs calculées de paramètre électrique à un point prédéterminé à l'intérieur du réseau de distribution d'énergie électrique, et **caractérisé par**
    la transmission de données de sortie sur la base des valeurs de sortie calculées au contrôleur de parc éolien, de sorte que le contrôleur de parc éolien fonctionne de la même manière que lorsqu'il est connecté à un parc éolien réel.

**13.** Procédé selon la revendication précédente, comprenant en outre
le calcul de valeurs de paramètre électrique pour chaque éolienne,
la transmission des valeurs calculées de paramètre électrique à une unité de virtualisation d'éolienne,
le calcul de valeurs de paramètre d'éolienne pour chacune des éoliennes sur la base des valeurs calculées de paramètre électrique, et
la transmission des valeurs calculées de paramètre d'éolienne au contrôleur de parc éolien.

**14.** Programme informatique comprenant des instructions exécutables conçues pour, lorsqu'elles sont exécutées par un système informatique, amener le système informatique à réaliser le procédé selon l'une quelconque des revendications 12 et 13.

**15.** Produit programme informatique comprenant un support de données lisible par ordinateur contenant le programme informatique selon la revendication précédente.

FIG 1

EP 2 765 668 B1

FIG 2

EP 2 765 668 B1

FIG 3

**REFERENCES CITED IN THE DESCRIPTION**

**Patent documents cited in the description**

- EP 2397689 A